# EUROPEAN PATENT SPECIFICATION

(11) **EP 3 904 275 B1**
(45) Date of publication and mention of the grant of the patent: **23.04.2025**
(21) Application number: 19905448.7
(22) Date of filing: 12.11.2019
(51) Int. Cl.: B67D 1/04, B67D 1/08

(54) **BEVERAGE DISPENSER**
GETRÄNKESPENDER
DISTRIBUTEUR DE BOISSONS

(30) Priority: 28.12.2018 JP 2018246747
(43) Date of publication of application: 03.11.2021
(60) Divisional application: 22210731.0
(73) Proprietor: Asahi Group Holdings, Ltd., Tokyo 130-8602 (JP); Asahi Breweries, Ltd., Tokyo 130-8602 (JP)
(72) Inventor: KURABE Yasuhiro, Moriya-shi, Ibaraki 302-0106 (JP); KITANO Junichi, Moriya-shi, Ibaraki 302-0106 (JP)
(74) Representative: Meissner Bolte Partnerschaft mbB
(86) International application number: PCT/JP2019/044324
(87) International publication number: WO 2020/137208

(56) References cited:
- WO-A1-2018/125957
- WO-A1-2018/140546
- JP-A- 2017 536 493
- JP-A- 2018 158 762
- US-A1- 2017 088 410

## Description

### Technical Field of Invention

The present invention relates to a beverage dispensing device capable of dispensing any beverage for a user in a store or the like.

### Prior Art

Conventionally, a system for dispensing a beverage specified by a user interface, such as a beverage dispensing device (dispenser) disclosed in, for example, Patent Literature 1, is known.

Patent Literature 1 discloses a configuration where macro-ingredients, micro-ingredients, and diluents are mixed by a dispensing valve, and a mixed beverage is dispensed from the dispensing valve. In the user interface, the user can alter ingredients as well as strength of the beverage as desired. WO 2018/140546 A1 and US 2009/069930 A1 also disclose that one or more macro-ingredients and one or more micro-ingredients are mixed within a dispensing nozzle and dispensed into a beverage container.

### Prior Art Document

### Patent Document

Patent Literature 1: JP 2009-528960A

### Disclosure of the invention

### Problem to be solved by invention

In the configuration disclosed in Patent Literature 1, since each ingredient is mixed and then dispensed in the dispensing valve, an ingredient that is previously dispensed and remains in the dispensing valve is mixed with an ingredient to be subsequently dispensed, which may cause variations in quality and flavor of the beverage after dispensing.

In accordance with the number of ingredients, a structure of the dispensing valve becomes complicated and the labor of maintenance such as washing also increases.

As another problem, if the user can set proportions of ingredients freely, a beverage far away from an image of the user may be dispensed. That is, for example, for the purpose of completing a favorite flavor, it is also possible that an operation error in which the proportion of a main flavor and an additional flavor is erroneously selected in an opposite manner may occur.

As another problem, it is considered that the user's satisfaction cannot be obtained simply by providing a beverage associated with the name of the flavor (name of a fruit) or the like. Therefore, from a viewpoint other than selection of a flavor, it is necessary to consider eliciting a user's potential preference.

In view of the above problems, the present invention proposes a technique capable of providing a beverage of a flavor imaged by a user with higher quality without erring and capable of providing a beverage close to an image of a user by allowing a user to set the flavor from a viewpoint other than selection of a flavor.

### Means for solving problem

The problem to be solved by the present invention is as described above, and means for solving this problem is defined by independent claim 1 as appended. Further embodiments are given in dependent claims.

### Effect/Function of Invention

According to the configuration of the present invention, since a dispensing valve is not used, an ingredient that is previously dispensed and remains in the dispensing valve is not mixed with an ingredient to be subsequently dispensed, and no variation is detected in quality and flavor of a beverage after dispensing. In addition, a dispensing valve having a complicated structure is not required and it is unnecessary to perform maintenance such as washing of the dispensing valve.

### Brief Description of Drawings

FIG. 1 is a diagram showing an embodiment of a device configuration for carrying out the present invention;
FIG. 2 is a diagram illustrating a display of an interface used in Embodiment 1;
FIG. 3 is a diagram illustrating a display of an interface in step 1 of Embodiment 2;
FIG. 4 is a diagram illustrating a display of an interface in step 2 of Embodiment 2;
FIG. 5 is a diagram illustrating a display of an interface in step 3 of Embodiment 2;
FIG. 6 is a diagram illustrating a display of an interface in step 2 of Embodiment 3;
FIG. 7 is a diagram illustrating a display of an interface used in Embodiment 4; and
FIG. 8 is a diagram illustrating a display of an interface used in Embodiment 4.

### Embodiments for carrying out Invention

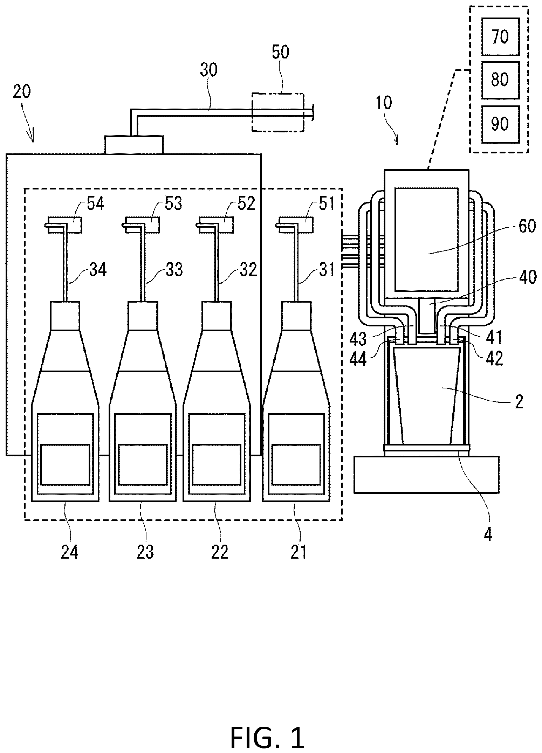

FIG. 1 is a diagram showing an embodiment of a device configuration for carrying out the present invention. FIG. 1 shows a dispenser body 10, a diluent tank 20 including a diluent, and a plurality of syrup tanks 21, 22... for respectively storing different types of syrups.

The dispenser body 10 is provided with a stage 4 on which a drinking vessel 2, such as a glass or jug, is placed, a plurality of dispensing outlets 40, 41... are provided above the stage 4, and liquids are dispensed into the drinking vessel 2 from the respective dispensing outlets 40, 41.... The stage 4 may be configured to be automatically raised or lowered or tilted.

The dispensing outlet 40 leads to the diluent tank 20 via a diluent path 30, and the diluent in the diluent tank 20 is dispensed from the dispensing outlet 40 by a transfer portion 50 provided in the diluent path 30.

When the diluent is beer, highball, or the like, in addition to the diluent tank 20, a carbon dioxide gas source (carbon dioxide gas cylinder or the like) (not shown) is connected to the diluent path 30, the transfer portion 50 is constituted by a solenoid valve, and the diluent is dispensed under pressure of carbon dioxide gas by switching the solenoid valve.

Dispensing outlets 41, 42... lead to the syrup tanks 21, 22... via the syrup paths 31, 32... respectively, and beverages in the syrup tanks 21, 22... are dispensed from the dispensing outlets 41, 42... by transfer portions 51, 52... provided in the syrup paths 31, 32....

As the type of syrup stored in each syrup tank, for example, lime, lemon, apple, plum, grape, grapefruit, blackcurrant, citrus depressa, or the like can be considered. The syrup may be a lactic acid bacteria beverage.

The syrup paths 31, 32... may be configured with a flexible tube made of resin, and the transfer portions 51, 52... may be configured by Perista Pump (registered trademark) (a mechanism for compressing the tube from the outside and allowing the liquid inside to flow). With this configuration, the syrup can be transferred without coming into contact with anything other than the tube, and a variation in an amount of syrup extracted can be prevented. Instead of the Perista Pump (registered trademark), an air pump, a flow jet pump, or the like may be used.

Regular replacement of the syrup path is easy and maintenance is easy. By changing a tube diameter of the syrup path, a dispensing amount can be adjusted. For example, with a thin tube diameter, it is possible to set a minimum dispensing amount in a range of 0.2 mL to 1.5 mL.

With a configuration where the tube and the Perista Pump (registered trademark) are used, it is possible to flexibly deal with expansion when it is necessary to increase the types of syrup, and conversely, removal when reducing the types of syrup.

The dispenser body 10 is provided with a touch panel type interface 60 that can be operated by a user, each of the transfer portions 50, 51... is driven based on setting data set by an operation of the interface 60 by the user, the liquids are dispensed into the drinking vessel 2 from the respective dispensing outlets 40, 41..., and the respective liquids are mixed in the drinking vessel 2 to complete a desired beverage.

The dispenser body 10 is provided with a transfer control unit 70 for controlling the transfer portions 50, 51... The transfer control unit 70 controls the transfer portion 50, 51... to dispense a predetermined amount of diluent or flavor based on the setting data set by the operation of the interface 60. The interface 60 may have a function of the transfer control unit 70.

By providing the dispenser body 10 with a communication unit 80, the dispenser body 10 is connected to the Internet by Wi-Fi, data can be downloaded/uploaded to and from the server, and the dispenser body 10 can be operated by a smartphone.

With a storage/control unit 90 in the dispenser body 10, various data may be stored and updated only in the dispenser body 10 without communicating with the outside, and various mechanisms may be locally controlled and driven. The interface 60 may have a function of the storage/control unit 90.

### [Embodiment 1]

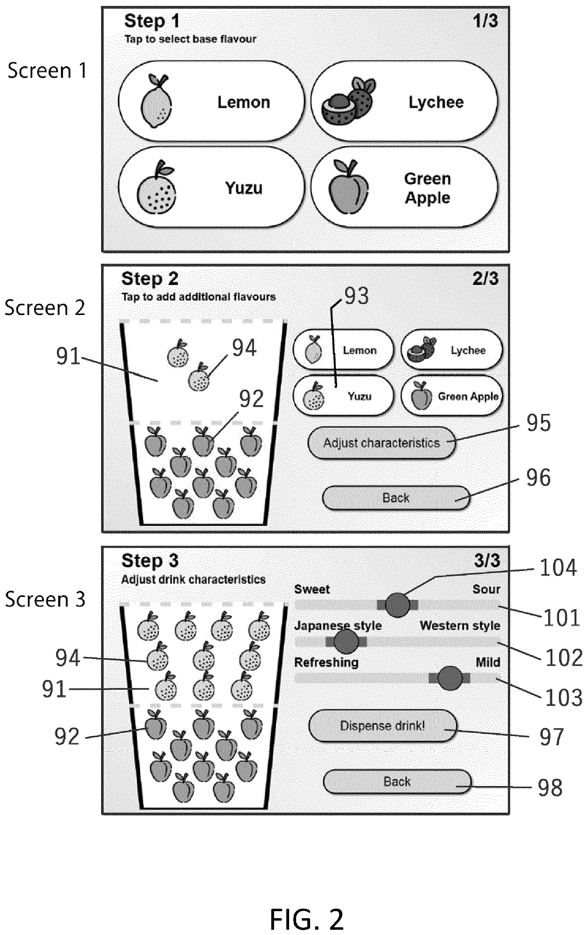

Next, an example of a screen displayed by an interface and an example of a usage pattern is described.
In Embodiment 1 shown in FIG. 2, it is assumed that a beverage is dispensed by three steps through three screen transitions.
In this example, distilled liquor (shochu) divided by carbonated water (chuhai) is used as a diluent and a cocktail is made based on a selected flavor.

### Screen 1:

### <Step 1: Select a base flavor>

On the screen 1, four types of flavors are displayed as candidates for the "base flavor" and one of them is selected.

The types of flavors are "Lemon," "Lychee," "Yuzu," and "Green Apple," and each of these flavors is indicated by an icon. Each flavor corresponds to a type of syrup stored in a syrup tank.

When any one of icons is selected on the screen 1, the screen transitions to the screen 2. The flavor selected here is a base flavor for constituting a main flavor of the finished beverage. A volume A of the base flavor is defined to be the same as a total volume B of additional flavors selected in step 2, which is described hereinafter. In this way, the volume A of the base flavor is 50%, and it is possible to prevent the flavor of the beverage to be provided from being far away from an image of a user. In this way, by using the "base flavor," it is possible to prevent the user from being vacillated due to excessive selection candidates, it is possible to elicit a potential preference, and it is possible to realize a user-friendly configuration.

### Screen 2:

### <Step 2: Select additional flavors>

On the screen 2, the four types of flavors previously presented on the screen 1 are displayed as candidates for the "additional flavors" and one or more of these additional flavors are selected.

On the screen 2, ten "Green Apple" icons 92 are displayed in an image 91 of a vessel, and on the screen 1, the "Green Apple" is selected as the base flavor.

In this state, when a selection icon 93 of the "additional flavors" is selected, an icon 94 of the additional flavors is displayed in the image 91 of the vessel in accordance with the number of times of selection. In this example, by selecting the selection icon 93 of "Yuzu" twice, two icons 94 of "Yuzu" are displayed.

The additional flavors can be selected from one or more of the four types for totally 10 times, such that a total of ten icons 94 of the additional flavors can be displayed in the image 91 of the vessel. If the same flavor is selected for 10 times, all the icons 94 are the same, and if a plurality of flavors are selected, a plurality of icons 94 are displayed.

The number (10) of icons 94 of the additional flavors is the same as the number (10) of icons 92 of the base flavor, and by matching the numbers in this way, it is possible to visually communicate to the user a proportion of the "base (basic)" and "additional" flavors in an easy-to-understand manner.

As described above, when the selection (10 times) by the selection icons 93 of the "additional flavors" is completed on the screen 2 and an icon 95 for proceeding to the next is selected, the screen 3 is displayed. When a back icon 96 is selected, a screen can be returned to the screen 1, and the operation on the screen 1 can be performed again.

### Screen 3:

### <Step 3: Setting of characteristic parameters>

On the screen 3, the ten "Yuzu" icons 94 indicating an "additional flavor" set on the screen 2 are displayed above the ten "Green Apple" icons 92 indicating the "base flavor."

Further, on the screen 3, the characteristic parameters for adjusting "characteristics" of a beverage to be completed are defined by adding to information set on the screen 2.

Herein, the "characteristics" are defined based on a concept of an opposite relation as follows, and which of opposite concepts is closer is defined by numerical values of parameters.
Characteristic 1: "Sweet" and "Sour"
Characteristic 2: "Japanese Style" and "Western Style"
Characteristic 3: "Refreshing" and "Mild"

For example, regarding Characteristic 1, a numerical value of a parameter is defined by "0" with "Sweet" as a limit on one side, and a numerical value of a parameter is defined by "10" with "Sour" as a limit on the other side. When the numerical value of the parameter is "0," "Sweet" and "Sour" are defined as a 1:0 relation, when the numerical value of the parameter is "5," "Sweet" and "Sour" are defined as a 1:1 relation, and when the numerical value of the parameter is "10," "Sweet" and "Sour" are defined as a 0:1 relation.

Further, the above characteristic parameters are displayed on linear displays 101 to 103, the opposite concepts are displayed at both ends respectively, and the user can intuitively understand the setting of the above numerical values within a range of both ends of a linear display by operating a pointer 104. In addition to setting by such a combination of the linear display and the pointer, a number may be input, and a dial display, or the like may be used.

The concept of each characteristic is associated with each syrup. For example, regarding Characteristic 1, a "Yuzu" syrup is associated with "Sweet," and a "Lemon" syrup is associated with "Sour."
Similarly, for example, regarding Characteristic 2, a "Yuzu" syrup is associated with "Japanese Style," and a "Lychee" syrup is associated with "Western Style."
Similarly, for example, regarding Characteristic 3, a "Lemon" syrup is associated with "Refreshing," and a "Green Apple" syrup is associated with "Mild."

Further, for example, regarding the Characteristic 1 of the above example, when the parameter of the Characteristic 1 is changed to the "Sour" side by the operation of the pointer 104 in the linear display 101, the setting of the "additional flavors" set in the above step 2 is updated.

That is, as shown in the screen 3 of FIG. 2, for example, in a case where ten "Yuzu" icons 94 are displayed as the "additional flavor," when the pointer 104 is operated to a right side ("Sour"), the "Lemon" syrup is used as a substitute for a part of the volume of the "Yuzu" syrup. It is assumed that a part of this volume is, for example, 1/30 of the total volume of the "Yuzu" syrup before the change. With this setting, as the "additional flavor," the "Yuzu" syrup is used as the total volume of 29/30, and the "Lemon" syrup is used as the total Lemon of 1/30 (the total volume of the "additional flavor" is not changed).

Alternatively, the "Lemon" syrup added to the "Yuzu" syrup, that is, the "Lemon" syrup having a volume of 1/30 of the volume of the "Yuzu" syrup, added to the "Yuzu" syrup set as the "additional flavor" is referred to as the "additional flavor" (the total volume of the "additional flavor" is not changed). In response to change of the parameter of the Characteristic 1, the ten "Yuzu" icons 94 indicating the "additional flavor" may be changed or may not be changed.

It is possible to set such a characteristic parameter, so that by performing "additional selection" with respect to selection of the "additional flavors," it is possible to elicit the user's potential preference and to enjoy customization. Further, on the screen 3, a range of the pointer 104 (range of the numerical values of the parameters) that can be selected in the linear display 101 is limited to a partial range from a viewpoint of the "additional selection."

By adding such a limitation, it is possible to provide a beverage reflecting a user's preference without being far away from an image of a beverage to be completed with the contents set in the "base flavor" in step 1 and the "additional flavors" in step 2. A limited range can be set, for example, by referring to a data table including a setting pattern (combination) and a limit pattern (ranges of characteristic parameters 1 to 3) of step 1 and step 2. Further, the limited range may be set based on various factors such as weather information, temperature information, user age information, and event information.

As described above, when the setting of the characteristic parameters is completed and an icon 97 for proceeding to the next is selected on the screen 3, a liquid is dispensed based on each setting. When a back icon 98 is selected, a screen can be returned to the screen 2, and the operation on the screen 2 can be performed again.

In the above embodiment, each characteristic may be realized by using a syrup that is not displayed on the screen 1 and the screen 2. For example, by associating a "Blackcurrant" syrup with a concept of "Western Style," the "Blackcurrant" syrup is dispensed when the "Western Style" side is set. In this way, various characteristics can be realized by using various syrups as a "hidden taste."

In the above embodiment, the syrup set as the "base flavor" is set as a first dispensing liquid and the syrup (alone or in combination) set as the "additional flavor" (updated in a case where characteristics are updated on the screen 3) is set as a second dispensing liquid, which are dispensed from each of the dispensing outlets. At the same time, the diluent is also dispensed.

Herein, the proportion of the first dispensing liquid, the second dispensing liquid, and the diluent can be, for example, 1:1:12, but the proportion may be changed.

For example, by setting the proportion of the first dispensing liquid, the second dispensing liquid, and the diluent to 0.5:0.5:13 and increasing the proportion of the diluent, it is possible to increase the proportion of distilled liquor (shochu) to the whole, and it is possible to increase an alcohol content. Reverse setting, that is, reducing the proportion of the diluent can be performed.

### [Embodiment 2]

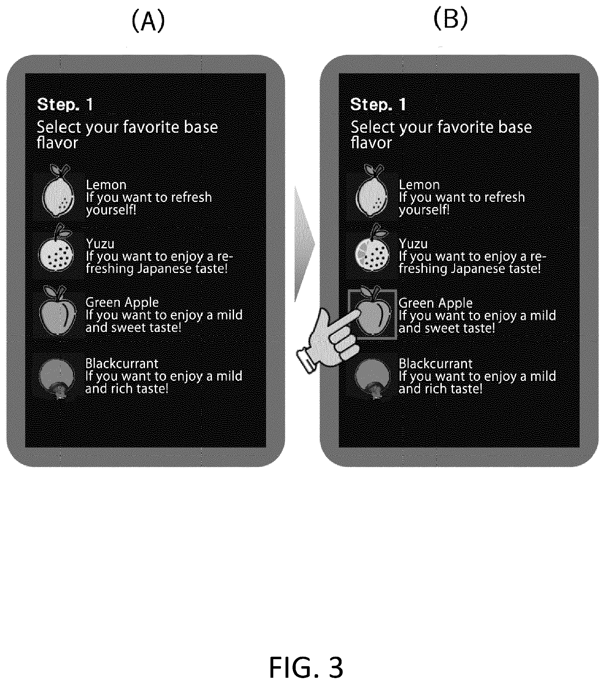

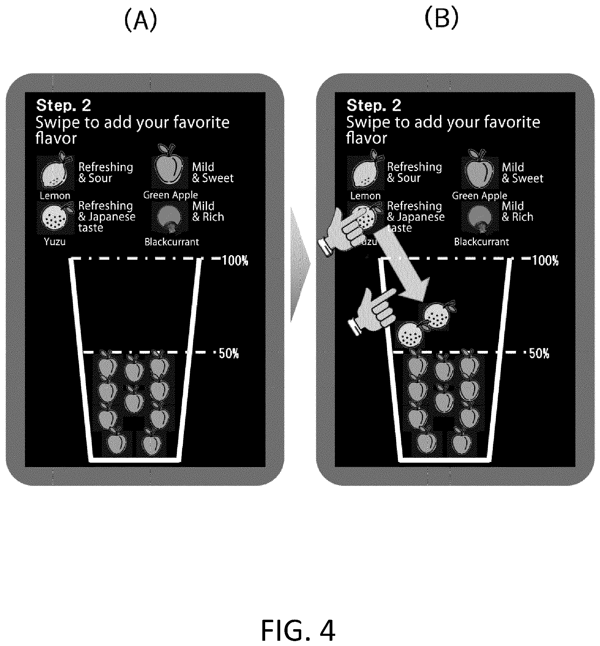

Next, another embodiment of the interface is described. FIGS. 3(A) and 3(B) are screens of <Step 1: Select a base flavor>.
The following explanations are displayed.
"Step 1 Select your favorite base flavor"
"Lemon If you want to refresh yourself!"
"Yuzu If you want to enjoy a refreshing Japanese taste!"
"Green Apple If you want to enjoy a mild and sweet taste!"
"Blackcurrant If you want to enjoy a mild and rich taste!"
When a user selects an icon for one of these four flavors, the screens transitions to screens shown in FIG. 4 below.

FIGS. 4(A) and 4(B) are screens of <Step 2: Select additional flavors>.
The following explanations are displayed.
"Step2 Swipe to add your favorite flavor"
"Lemon Refreshing & Sour"
"Yuzu Refreshing & Japanese taste"
"Green Apple Mild & Sweet"
"Blackcurrant Mild & Rich"

An image of a vessel is displayed, and ten icons of the base flavor "Green Apple" selected in step 1 are displayed in the vessel.
A line-shaped display and a numerical value indicating that a proportion of this base flavor is 50% of the whole are displayed, and it is possible to visually communicate to the user in an easy-to-understand manner.

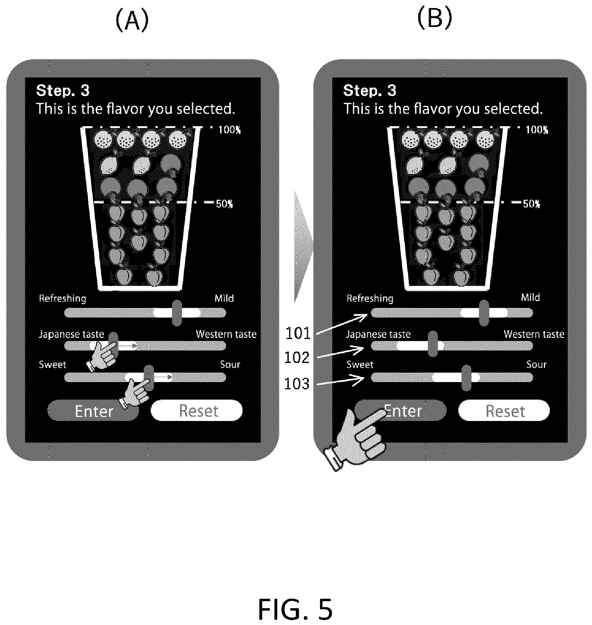

Further, from the state of FIG. 4(A), as shown in FIG. 4(B), the user freely selects an icon of an additional flavor and swipes the icon into the image of the vessel. By such a swipe operation, it is possible to perform a work of "adding" a flavor in a simulated manner, and it is possible to give the user an intuitive operation feeling.
The additional flavor may be the same as the base flavor, or may be of a single type or of a plurality of types.Up to ten additional flavor icons can be swiped in, and a total of 20 icons, including the base flavor icons, fill up to 100% of a line-shaped display, and the screen transitions to the next screen shown in FIG. 5.

FIGS. 5(A) and 5(B) are screens of <Step 3: Setting of characteristic parameters>.
The flavor icons selected in steps 1 and 2 is displayed on the image of the vessel.
Further, linear displays 101 to 103 for setting the following characteristic parameters are displayed.
   Characteristic 1: "Refreshing" and "Mild"
   Characteristic 2: "Japanese taste" and "Western taste"
   Characteristic 3: "Sweet" and "Sour"

The user can set the characteristics by sliding the pointer 104. A range that can be set by sliding is the same as that of Embodiment 1 above, and the point that each characteristic is associated with a syrup is also the same as that of Embodiment 1.

As described above, when the setting of the characteristic parameters is completed as shown in FIG. 5(A) and a decision icon is selected as shown in FIG. 5(B), a liquid is dispensed based on each setting. When an icon for redoing the setting is selected, the screen can be returned to an initial screen, and the operation can be performed again.

### [Embodiment 3]

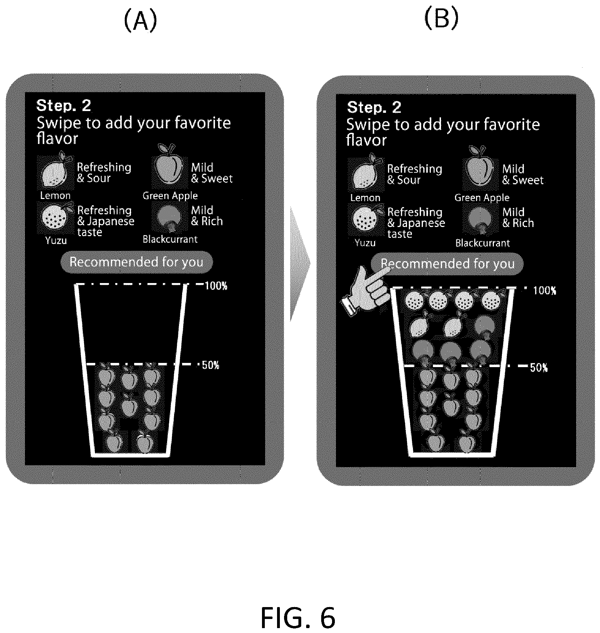

In Embodiment 3, as shown in FIGS. 6(A) and 6(B), in the selection of the additional flavors in Step 2 of Embodiment 2 above, a "Recommended for you" icon is displayed, and when this icon is selected, ten additional flavor icons are automatically selected and displayed in an image of a vessel.

This form is a "recommendation function," which proposes to the user a "combination" of additional flavors. As for the "combination," it is considered that an interface acquires "external environmental information" such as weather and temperature and selects the "combination" based on a data table associated with the "external environment information" and the "combination," and that the interface acquires "user information" such as gender, age, and preference input by the user and selects "combination" based on a data table associated with the "user information" and the "combination."

It is considered that the acquisition of the "external environment information" and the "user information" by the interface is obtained by directly inputting by the user, photographing and automatically analyzing the user with a camera provided in the interface, or acquiring the temperature by a sensor provided in the interface, or from another device or a server by Wi-Fi. The information may be acquired from a smartphone or the like (mobile information terminal) of the user.

Regarding the "recommendation function," an artificial intelligence (AI) installed in a server or a local device is used to record and store information on provided beverages and an association between the "external environment information" and the "user information," and the Artificial Intelligence is capable of learning trends and user's preference patterns and utilizing learning results.

For example, the "combination" which is preferred by users in the same age group may be displayed in a recommendation manner while appropriately updating the "combination," or may be displayed in a ranking format (today's popularity Best 10 and popularity ranking by generation) that fluctuates from time to time, or in an order history of a previous person. It is also possible to collect data from beverage dispensing devices in each store by Wi-Fi communication or the like, construct big data by cloud computing, and analyze and utilize the big data by the artificial intelligence. Such big data can also be used for analysis for product development in a manufacturer.

### [Embodiment 4]

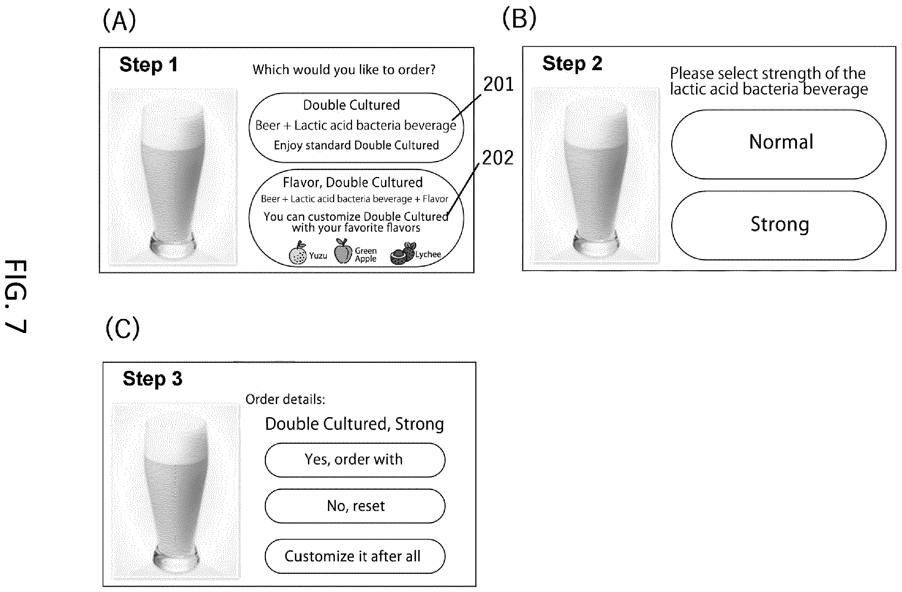

In the present embodiment, a cocktail (Double Cultured (registered trademark)) in which beer is used as a diluent and a lactic acid bacteria beverage is used as a syrup is prepared.
As shown in FIG. 7(A),
a selection icon 201 for selecting "Double Cultured" and
a selection icon 202 for selecting "Flavor, Double Cultured" are displayed.

Regarding the "Double Cultured" of the present embodiment, in the above device configuration, the beer corresponds to the diluent and the lactic acid bacteria beverage corresponds to a base flavor and additional flavors. It may be interpreted that the lactic acid bacteria beverage is the base flavor and also the additional flavors.

The "Flavor, Double Cultured" of the present embodiment is obtained by adding another flavor to the "Double Cultured," and in the above device configuration, the beer corresponds to the diluent, the lactic acid bacterium beverage corresponds to the base flavor, and the flavor corresponds to the additional flavors. The beer can also be a non-alcoholic beer-flavored beverage.

When the "Double Cultured" is selected in FIG. 7(A), as shown in FIG. 7(B), as step 2, "Normal" and "Strong" icons are displayed for the lactic acid bacteria beverage and the user can use the strength of the lactic acid bacteria beverage.
For example, in a case of "Normal," a relative ratio of the diluent to the lactic acid bacteria beverage is set to 5:1, and in a case of "Strong," a relative ratio of the diluent to the lactic acid bacteria beverage is set to 3:1.

When "Strong" is selected for the lactic acid bacteria beverage, a confirmation screen as shown in FIG. 7(C) is displayed as step 3, and dispensing is performed as appropriate.

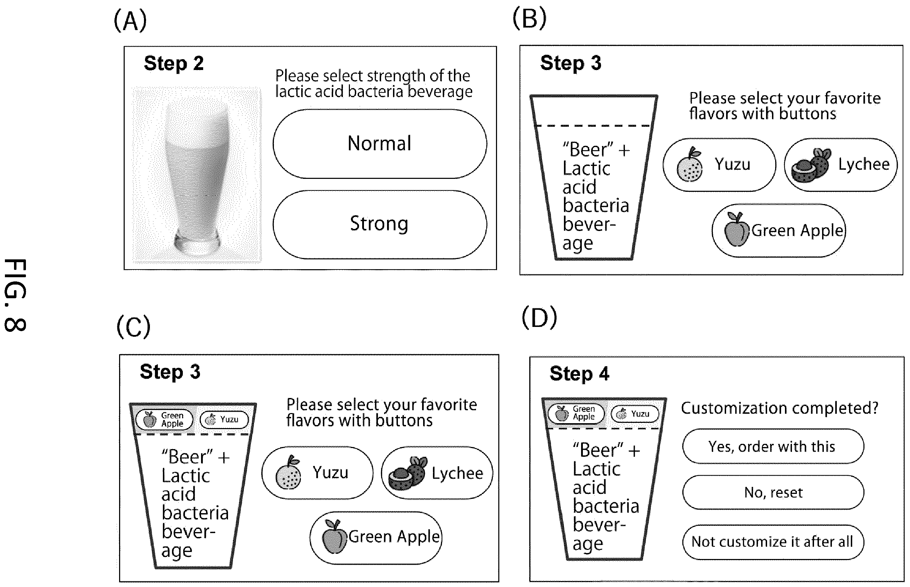

Further, when the "Flavor, Double Cultured" is selected in FIG. 7(A), as shown in FIG. 8(A), as step 2, "Normal" and "Strong" icons are displayed for the lactic acid bacteria beverage, and the user can select the strength of the lactic acid bacteria beverage.
For example, in a case of "Normal," a relative ratio of the diluent to the lactic acid bacteria beverage is set to 5:1, and in a case of "Strong," a relative ratio of the diluent to the lactic acid bacteria beverage is set to 3:1.

Then, as shown in FIG. 8(B), as step 3, a selection screen of additional flavor icons is displayed. When the additional flavor icons are selected, added flavor icons are displayed above an image of a vessel, as shown in FIG. 8(C). "Beer" and "Lactic acid bacteria beverage" are also displayed at the same time, and contents set by a user are displayed in an easy-to-understand manner.

When the selection of the additional flavors in step 3 is completed, a confirmation screen is displayed as step 4 as shown in FIG. 8(D) and dispensing is performed as appropriate.

The present invention can be carried out according to the embodiments described above and can be configured as follows.
As shown in FIG. 1, there is provided a beverage dispensing device capable of dispensing a syrup and a diluent into a drinking vessel, comprising:
a plurality of syrup paths 31, 32... that are connected to a plurality of syrup tanks 21, 22... for respectively storing different types of syrups and
serve as paths for transferring the syrups;
a diluent path 30 that is connected to a diluent tank 20 for storing a diluent and serves as a path for transferring the diluent;
transfer portions 50, 51... configured to respectively transfer a liquid through each of the syrup paths 31, 32... and the diluent path 30; and
a transfer control unit 70 configured to control the transfer portions 50, 51... based on setting data for controlling the transfer portions 50, 51...; the beverage dispensing device configured to be connectable to an interface 60 for a user to define the setting data, and wherein the setting data includes information of a first dispensing liquid corresponding to one type of syrup selected as a base flavor from the plurality of syrups, and
information of a second dispensing liquid corresponding to one type of syrup or a combination of a plurality of syrups selected as an additional flavor from the plurality of syrups, and
the first dispensing liquid, the second dispensing liquid, and the diluent are dispensable by an operation of the interface by the user.

According to the configuration, since a dispensing valve is not used, an ingredient that is previously dispensed and remains in the dispensing valve is not mixed with an ingredient to be subsequently dispensed, and no variation is detected in quality and flavor of a beverage after dispensing. In addition, a dispensing valve having a complicated structure is not required and it is unnecessary to perform maintenance such as washing of the dispensing valve.

A volume of the first dispensing liquid is the same as a volume of the second dispensing liquid.

In this way, since the first dispensing liquid corresponding to the base flavor has a volume of half "the total volume of the first dispensing liquid and the second dispensing liquid," it is possible to reliably leave the presence of the base flavor, prevent the beverage far away from the image of the user from being dispensed, and reliably provide a flavor in accordance with the user's preference.

A ratio between a total volume of the first dispensing liquid and the second dispensing liquid to a volume of the diluent is randomly definable.

In this way, it is possible to set the strength of a flavor such as "Normal" and "Strong" according to the user's preference, and it is possible to provide a more detailed beverage according to a user's desire.

Each of the syrups is associated with a characteristic parameter, both limits of a range of the characteristic parameter are defined by a concept that the limits are reverse to each other,
the information of the second dispensing liquid of predefined setting data is updated by defining the characteristic parameter by the user in the interface,
a numerical range of the characteristic parameter is a partial range of an entire range of the characteristic parameter, and
the partial range is defined by the information of the first dispensing liquid and the second dispensing liquid included the setting data.

In this way, not only a beverage associated with a name of a flavor (name of a fruit) and the like is provided, but also a user's potential preference can be elicited from characteristics that are viewpoints other than the selection of the flavor, and it is possible to provide an opportunity for the user to select the characteristics and to complete a beverage customized by the user.
By limiting a range of the numerical values, it is possible to provide a beverage reflecting a user's preference without being far away from an image of a beverage to be completed with the contents set in the "base flavor" and the "additional flavors."

The entire range of the characteristic parameter is expressed by a linear display displayed on the interface;
the partial range of the characteristic parameter is expressed by setting a specific portion of the linear display in a display format different from that of the other portion; and
the characteristic parameter is definable in the partial range.

In this way, it is possible to realize a configuration that is easy for the user to operate.

The transfer portion is individually provided in each of the syrup paths and the diluent path.

In this way, it is possible to flexibly deal with expansion when it is necessary to increase the types of syrup, and conversely, removal when reducing the types of syrup.

The diluent is an alcoholic beverage or a non-alcoholic beverage. The alcoholic beverage can be the brewed liquor (beer, wine, sake, or the like) or the distilled liquor (shochu, whiskey, vodka, gin, or the like), and these can be carbonated beverages. The diluent can also be soft drink.

The syrup is a lactic acid bacteria beverage, such as Calpis (registered trademark).

The interface includes:
a touch panel device attached to the beverage dispensing device;
a touch panel device configured to remotely control the beverage dispensing device; or
a smartphone of the user.

The beverage dispensing device is configured to:
store the setting data;
construct a database based on the stored setting data;
create a setting data candidate based on the database;
match the user with the setting data candidate; and
provide the matched setting data candidate as the additional flavor.

The beverage dispensing device is communicably connected to a server, the setting data is uploaded to the server and stored in the server from the beverage dispensing device,
a database is constructed based on the setting data stored in the server,
the server is configured to create a setting data candidate based on the database, the server is configured to transmit the setting data candidate to the beverage dispensing device, and the beverage dispensing device is configured to match the user with the setting data candidate and provide the matched setting data candidate as the additional flavor.

There is provided a method for adjusting taste of a beverage of a beverage dispensing device capable of dispensing a plurality of selectable syrups and one diluent into a drinking vessel, the method comprising:
associating each of the syrups with a characteristic parameter;
defining both limits of a range of the characteristic parameter based on a concept that the limits are reverse to each other;
updating predefined setting data by defining the characteristic parameter by the user in an interface provided in the beverage dispensing device;
defining a numerical range of the characteristic parameter as a partial range of an entire range of the characteristic parameter;
expressing the entire range of the characteristic parameter by a linear display displayed on the interface;
expressing the partial range of the characteristic parameter by configuring a specific portion of the linear display in a display format different from that of the other portion; and defining the characteristic parameter in the partial range.

### List of Reference Symbols

- 10: dispenser body
- 20: diluent tank
- 21: syrup tank
- 30: diluent path
- 31: syrup path
- 40: dispensing outlet
- 50: transfer portion
- 60: interface

## Claims

1. A beverage dispensing device capable of dispensing a syrup and a diluent into a drinking vessel (2), comprising:
a stage (4) for the drinking vessel (2) to be placed thereon,
a plurality of syrup paths (31, 32, 33, 34) that are connected to a plurality of syrup tanks (21, 22, 23, 24) for respectively storing different types of syrups and serve as paths for transferring the syrups;
a diluent path (30) that is connected to a diluent tank (20) for storing a diluent and serves as a path for transferring the diluent;
a first transfer portion (50) provided in the diluent path (30) and configured to transfer the diluent;
a plurality of second transfer portions (51, 52, 53, 54) provided in the respective syrup paths (31, 32, 33, 34) and configured to transfer the respective syrups; and
a transfer control unit (70) configured to control the first and second transfer portions (50, 51, 52, 53, 54) based on setting data for controlling the transfer portions;
the beverage dispensing device configured to be connectable to an interface (60) for a user to define the setting data, and
wherein
the setting data includes
information of a first dispensing liquid corresponding to one type of syrup selected as a base flavor from the plurality of syrups, and
information of a second dispensing liquid corresponding to one type of syrup or a combination of a plurality of syrups selected as an additional flavor from the plurality of syrups, and
the first dispensing liquid, the second dispensing liquid, and
the diluent are dispensable by an operation of the interface by the user,
the beverage dispensing device further comprising over the stage (4) a plurality of dispensing outlets (40, 41, 42, 43, 44) from which the diluent and the syrups are respectively dispensed in the drinking vessel (2),
wherein one (40) of the dispensing outlets leads to the diluent tank (20) via the diluent path (30) so that the diluent in the diluent tank (20) is dispensed from said dispensing outlet (40) by the first transfer portion (50), whereas the others (41, 42, 43, 44) of the dispensing outlets lead to the respective syrup tanks (21, 22, 23, 24) via the respective syrup paths (31, 32, 33, 34) so that the syrups in the syrup tanks (21, 22, 23, 24) are dispensed from said dispensing outlets (41, 42, 43, 44) by the second transfer portions (51, 52, 53, 54).

2. The beverage dispensing device according to claim 1, wherein a volume of the first dispensing liquid is the same as a volume of the second dispensing liquid.

3. The beverage dispensing device according to claim 1 or 2,
wherein a ratio of a total volume of the first dispensing liquid and the second dispensing liquid to a volume of the diluent is randomly definable.

4. The beverage dispensing device according to any one of claims 1 to 3, wherein the diluent is an alcoholic beverage or a non-alcoholic beverage.

5. The beverage dispensing device according to claim 4, wherein the alcoholic beverage is a brewed liquor or a distilled liquor.

6. The beverage dispensing device according to any one of claims 1 to 5, wherein the syrup is a lactic acid bacteria beverage.

7. The beverage dispensing device according to any one of claims 1 to 6, wherein the interface (60) comprises:
a touch panel device attached to the beverage dispensing device;
a touch panel device configured to remotely controlling the beverage dispensing device; or
a smartphone of the user.

8. The beverage dispensing device according to any one of claims 1 to 7, wherein the beverage dispensing device is configured to:
store the setting data;
construct a database based on the stored setting data;
create a setting data candidate based on the database;
match the user with the setting data candidate; and
provide the matched setting data candidate as the additional flavor.

9. The beverage dispensing device according to any one of claims 1 to 7, wherein the beverage dispensing device is communicably connected to a server,
the setting data is uploaded to the server and stored in the server from the beverage dispensing device,
a database is constructed based on the setting data stored in the server,
the server is configured to create a setting data candidate based on the database,
the server is further configured to transmit the setting data candidate to the beverage dispensing device, and
the beverage dispensing device is configured to match the user with the setting data candidate and provide the matched setting data candidate as the additional flavor.

## Patentansprüche

1. Getränkeabgabevorrichtung, die einen Sirup und ein Verdünnungsmittel in ein Trinkgefäß (2) abgeben kann, umfassend:
ein Podest (4), um darauf das Trinkgefäß (2) zu platzieren,
eine Vielzahl von Siruppfaden (31, 32, 33, 34), die mit einer Vielzahl von Siruptanks (21, 22, 23, 24) zum jeweiligen Verwahren von unterschiedlichen Typen von Sirupen verbunden sind und als Pfade zum Transferieren der Sirupe dienen;
einen Verdünnungsmittelpfad (30), der mit einem Verdünnungsmitteltank (20) zum Verwahren eines Verdünnungsmittels verbunden ist und als Pfad zum Transferieren des Verdünnungsmittels dient;
einen ersten Transferabschnitt (50), der in dem Verdünnungsmittelpfad (30) bereitgestellt ist und ausgestaltet ist, um das Verdünnungsmittel zu transferieren;
eine Vielzahl von zweiten Transferabschnitten (51, 52, 53, 54), die in den jeweiligen Siruppfaden (31, 32, 33, 34) bereitgestellt sind und ausgestaltet sind, um die jeweiligen Sirupe zu transferieren; und
eine Transfersteuereinheit (70), die ausgestaltet ist, um den ersten und
zweiten Transferabschnitt (50, 51, 52, 53, 54) basierend auf Einstellungsdaten zum Steuern der Transferabschnitte zu steuern;
wobei die Getränkeabgabevorrichtung ausgestaltet ist, um mit einer Schnittstelle (60) für einen Benutzer, um die Einstellungsdaten zu definieren, verbindbar zu sein, und wobei
die Einstellungsdaten einschließen:
Informationen zu einer ersten Abgabeflüssigkeit, die einem Typ von Sirup entsprechen, der als ein Basisaroma von der Vielzahl der Sirupe ausgewählt ist, und
Informationen zu einer zweiten Abgabeflüssigkeit, die einem Typ von Sirup oder einer Kombination einer Vielzahl von Sirupen entsprechen, der/die als zusätzliches Aroma aus der Viel¬zahl von Sirupen ausgewählt ist, und
wobei die erste Abgabeflüssigkeit, die zweite Abgabeflüssigkeit und das Verdünnungsmittel durch eine Operation der Schnittstelle durch den Benutzer abgebbar sind,
die Getränkeabgabevorrichtung des Weiteren über dem Podest (4) eine Vielzahl von Abgabeauslässen (40, 41, 42, 43, 44) umfasst, aus denen das Verdünnungsmittel und die Sirupe jeweils in das Trinkgefäß (2) abgeben werden,
wobei einer (40) der Abgabeauslässe über den Verdünnungsmittelpfad (30) zu dem Verdün¬nungsmitteltank (20) führt, so dass das Verdünnungsmittel in dem Verdünnungsmitteltank (20) aus dem Abgabeauslass (40) durch den ersten Transferabschnitt (50) abgegeben wird, während die anderen (41, 42, 43, 44) der Abgabeauslässe über die jeweiligen Siruppfade (31, 32, 33, 34) zu den jeweiligen Siruptanks (21, 22, 23, 24) führen, so dass die Sirupe in den Siruptanks (21, 22, 23, 24) über die zweiten Transferabschnitte (51, 52, 53, 54) aus den Abgabeauslässen (41, 42, 43, 44) abgegeben werden.

2. Getränkeabgabevorrichtung nach Anspruch 1, wobei ein Volumen der ersten Abgabeflüssigkeit dasselbe wie ein Volumen der zweiten Abgabeflüssigkeit ist.

3. Getränkeabgabevorrichtung nach Anspruch 1 oder 2, wobei ein Verhältnis eines Gesamtvolumens der ersten Abgabeflüssigkeit und der zweiten Abgabeflüssigkeit zu einem Volumen des Verdünnungsmittels zufällig definierbar ist.

4. Getränkeabgabevorrichtung nach einem der Ansprüche 1 bis 3, wobei das Verdünnungsmittel ein alkoholisches Getränk oder ein nicht-alkoholisches Getränk ist.

5. Getränkeabgabevorrichtung nach Anspruch 4, wobei das alkoholische Getränk eine gebraute Spirituose oder eine destillierte Spirituose ist.

6. Getränkeabgabevorrichtung nach einem der Ansprüche 1 bis 5, wobei der Sirup ein Getränk mit Milchsäurebakterien ist.

7. Getränkeabgabevorrichtung nach einem der Ansprüche 1 bis 6, wobei die Schnittstelle (60) umfasst:
eine Berührungsfeldvorrichtung, die an der Getränkeabgabevorrichtung befestigt ist;
eine Berührungsfeldvorrichtung, die ausgestaltet ist, um als Fernsteuerung der Getränkeabgabevorrichtung zu fungieren; oder
ein Smartphone des Benutzers.

8. Getränkeabgabevorrichtung nach einem der Ansprüche 1 bis 7, wobei die Getränkeabgabevorrichtung ausgestaltet ist zum:
Speichern der Einstellungsdaten;
Konstruieren einer Datenbank basierend auf den gespeicherten Einstellungsdaten;
Erstellen eines Einstellungsdatenkandidaten basierend auf der Datenbank;
Kombinieren des Benutzers mit dem Einstellungsdatenkandidaten; und
Bereitstellen des kombinierten Einstellungsdatenkandidaten als das zusätzliche Aroma.

9. Getränkeabgabevorrichtung nach einem der Ansprüche 1 bis 7, wobei die Getränkeabgabevorrichtung kommunikativ mit einem Server verbunden ist, die Einstellungsdaten auf den Server hochgeladen und in dem Server von der Getränkeabgabevorrichtung gespeichert werden,
eine Datenbank basierend auf den in dem Server gespeicherten Einstellungsdaten konstruiert wird,
der Server ausgestaltet ist, um basierend auf der Datenbank einen Einstellungsdatenkandidaten zu erstellen,
der Server des Weiteren ausgestaltet ist, um den Einstellungsdatenkandidaten an die Getränkeabgabevorrichtung zu übermitteln, und
die Getränkeabgabevorrichtung ausgestaltet ist, um den Benutzer mit dem Einstellungsdatenkandidaten zu kombinieren und den kombinierten Einstellungsdatenkandidaten als das zusätzliche Aroma bereitzustellen.

## Revendications

1. Dispositif de distribution de boisson apte à distribuer un sirop et un diluant dans un récipient à boire (2), comprenant :
un étage (4) sur lequel le récipient à boire (2) doit être placé,
une pluralité de trajets (31, 32, 33, 34) de sirop qui sont reliés à une pluralité de réservoirs (21, 22, 23, 24) à sirop respectivement destinés à stocker différents types de sirops et à servir de trajets afin de transférer les sirops ;
un trajet (30) de diluant qui est relié à un réservoir (20) à diluant destiné à stocker un diluant et à servir de trajet afin de transférer le diluant ;
une première partie de transfert (50) disposée dans le trajet (30) de diluant et conçue pour transférer le diluant ;
une pluralité de secondes parties de transfert (51, 52, 53, 54) disposées dans les trajets (31, 32, 33, 34) de sirop respectifs et conçues pour transférer les sirops respectifs ; et
une unité de commande de transfert (70) configurée pour commander les première et seconde parties de transfert (50, 51, 52, 53, 54) sur la base de données de réglage afin de commander les parties de transfert ;
le dispositif de distribution de boisson étant conçu pour pouvoir être relié à une interface (60) afin qu'un utilisateur définisse les données de réglage et les données de réglage comprenant
des informations d'un premier liquide de distribution correspondant à un type de sirop sélectionné en tant qu'arôme de base parmi la pluralité de sirops et
des informations d'un second liquide de distribution correspondant à un type de sirop ou à une combinaison d'une pluralité de sirops sélectionnés en tant qu'arôme supplémentaire parmi la pluralité de sirops et
le premier liquide de distribution, le second liquide de distribution et le diluant pouvant être distribués par un fonctionnement de l'interface par l'utilisateur,
le dispositif de distribution de boisson comprenant en outre au-dessus de l'étage (4) une pluralité de sorties de distribution (40, 41, 42, 43, 44) à partir desquelles le diluant et les sirops sont respectivement distribués dans le récipient à boire (2),
l'une sortie (40) parmi les sorties de distribution conduisant au réservoir (20) à diluant par l'intermédiaire du trajet (30) de diluant de telle sorte que le diluant dans le réservoir (20) à diluant est distribué à partir de ladite sortie de distribution (40) par la première partie de transfert (50), tandis que les autres sorties (41, 42, 43, 44) parmi les sorties de distribution conduisent aux réservoirs (21, 22, 23, 24) à sirop respectifs par l'intermédiaire des trajets (31, 32, 33, 34) de sirop respectifs de telle sorte que les sirops dans les réservoirs (21, 22, 23, 24) à sirop sont distribués à partir desdites sorties de distribution (41, 42, 43, 44) par les secondes parties de transfert (51, 52, 53, 54).

2. Dispositif de distribution de boisson selon la revendication 1, un volume du premier liquide de distribution étant le même qu'un volume du second liquide de distribution.

3. Dispositif de distribution de boisson selon la revendication 1 ou 2, un rapport d'un volume total du premier liquide de distribution et du second liquide de distribution à un volume du diluant pouvant être défini de manière aléatoire.

4. Dispositif de distribution de boisson selon l'une quelconque des revendications 1 à 3, le diluant étant une boisson alcoolisée ou une boisson non alcoolisée.

5. Dispositif de distribution de boisson selon la revendication 4, la boisson alcoolisée étant un alcool brassé ou un alcool distillé.

6. Dispositif de distribution de boisson selon l'une quelconque des revendications 1 à 5, le sirop étant une boisson à base de bactéries lactiques.

7. Dispositif de distribution de boisson selon l'une quelconque des revendications 1 à 6, l'interface (60) comprenant :
un dispositif de panneau tactile fixé au dispositif de distribution de boisson ;
un dispositif de panneau tactile configuré pour commander à distance le dispositif de distribution de boisson ; ou
un téléphone intelligent de l'utilisateur.

8. Dispositif de distribution de boisson selon l'une quelconque des revendications 1 à 7, le dispositif de distribution de boisson étant conçu pour :
stocker les données de réglage ;
construire une base de données sur la base des données de réglage stockées ;
créer des données de réglage candidates sur la base de la base de données;
apparier l'utilisateur avec les données de réglage candidates ; et
fournir les données de réglage candidates appariées en tant qu'arôme supplémentaire.

9. Dispositif de distribution de boisson selon l'une quelconque des revendications 1 à 7, le dispositif de distribution de boisson étant connecté en communication à un serveur,
les données de réglage étant téléchargées vers le serveur et stockées dans le serveur à partir du dispositif de distribution de boisson,
une base de données étant construite sur la base des données de réglage stockées dans le serveur,
le serveur étant configuré pour créer des données de réglage candidates sur la base de la base de données,
le serveur étant en outre configuré pour transmettre les données de réglage candidates au dispositif de distribution de boisson et
le dispositif de distribution de boisson étant configuré pour apparier l'utilisateur avec les données de réglage candidates et pour fournir les données de réglage candidates appariées en tant qu'arôme supplémentaire.
